# FASCICULE DE BREVET EUROPEEN

(11) **EP 3 175 601 B1**
(45) Date de publication et mention de la délivrance du brevet: **31.08.2022**
(21) Numéro de dépôt: 15756966.6
(22) Date de dépôt: 24.07.2015
(51) Int. Cl.: H04L 69/40

(54) **PROCÉDÉ DE TRAITEMENT D'UNE CONNEXION DÉFAILLANTE À UN RÉSEAU DE TÉLÉCOMMUNICATION**
VERFAHREN ZUR BEHANDLUNG EINER DEFEKTEN VERBINDUNG ZU EINEM TELEKOMMUNIKATIONSNETZWERK
METHOD FOR TREATING A FAULTY CONNECTION TO A TELECOMMUNICATIONS NETWORK

(30) Priorité: 31.07.2014 FR 1457468
(43) Date de publication de la demande: 07.06.2017
(73) Titulaire: IDEMIA France, 92400 Courbevoie (FR)
(72) Inventeur: MICHEL, Alexis, F-97200 Colombes (FR); DUMOULIN, Jérôme, F-92700 Colombes (FR)
(74) Mandataire: Idemia
(86) Numéro de dépôt international: PCT/FR2015/052063
(87) Numéro de publication internationale: WO 2016/016561

(56) Documents cités:
- EP-A1- 2 658 297
- US-A1- 2011 289 229

## Description

### DOMAINE TECHNIQUE AUQUEL SE RAPPORTE L'INVENTION

La présente invention concerne la connexion de terminaux à un réseau de télécommunication.

Elle concerne plus particulièrement un procédé de traitement d'une connexion défaillante à un réseau de télécommunication.

L'invention s'applique particulièrement avantageusement dans le cas où des données de connexion associées à un profil sont mémorisées dans une entité électronique sécurisée (par exemple une carte à microcircuit) qui équipe un terminal et sont délivrées et gérées à distance par des serveurs d'infrastructure du réseau de télécommunication. Ainsi, l'invention s'applique notamment lorsque l'entité électronique sécurisée ne mémorise qu'un seul profil de connexion afin de limiter les coûts.

### ARRIERE-PLAN TECHNOLOGIQUE

Pour accéder à un réseau de télécommunication et échanger des données sur ce réseau (ces données pouvant représenter un signal de voix dans le cas d'une communication téléphonique), chaque terminal mémorise des données de connexion qui lui sont propres et définissent un profil de connexion, généralement associé à un abonnement au service de télécommunication concerné.

Ces données de connexion permettent par exemple une authentification du terminal auprès d'un serveur d'infrastructure du réseau de télécommunication, puis un chiffrement des données échangées entre le terminal et le réseau de télécommunication.

Les données de connexion sont en général mémorisées dans des entités électroniques sécurisées, telles que des cartes à microcircuit.

On a prévu dans ce contexte que les données de connexion puissent être délivrées et gérées à distance par des serveurs d'infrastructure du réseau de télécommunication, par exemple selon une méthode dite OTA (pour *"Over The Air*") telle que celle décrite dans la spécification technique ETSI TS 102.225. Ceci est intéressant par exemple lorsque l'entité électronique sécurisée qui mémorise les données de connexion est une carte à microcircuit inamovible, par exemple soudée dans le terminal (ou eUICC pour *"embedded Universal Integrated Circuit Card*")*.*

On rencontre toutefois un problème dans ce cas lorsque les données de connexion mémorisées dans l'entité électronique sécurisée qui équipe le terminal ne permettent plus une connexion au réseau de télécommunication. En effet, le traitement de l'anomalie, prévu à distance (c'est-à-dire via le réseau de télécommunication), est alors impossible.

Le document EP 2658297 décrit un procédé permettant, par l'intermédiaire d'un premier dispositif électronique ayant accès à un réseau de radio-communication, de fournir à un deuxième dispositif électronique des données d'abonnement pour accéder à ce réseau de radio-communication.

### OBJET DE L'INVENTION

Dans ce contexte, la présente invention propose un procédé de traitement d'une connexion défaillante à un réseau de télécommunication, selon la revendication 1. Les revendications dépendantes présentent des modes de réalisation préférés de l'invention.

On utilise ainsi la connexion d'un terminal au réseau de télécommunication (en utilisant le premier profil) pour transmettre des informations à un serveur d'infrastructure du réseau de télécommunication en vue du traitement de l'anomalie du second profil associé à un second terminal.

Les données relatives au second profil sont toutefois transmises de manière sécurisée, d'une part grâce à la liaison sécurisée établie entre les deux terminaux et d'autre part grâce à la connexion (généralement sécurisée) entre le premier terminal et le réseau de télécommunication.

Selon les exemples
- le second profil est mémorisé dans une entité électronique sécurisée (par exemple une carte à microcircuit) ;
- l'entité électronique sécurisée est un module de souscripteur d'abonnement (à un service de connexion au réseau de télécommunication) comprenant au moins une clé et un identifiant de connexion au réseau de télécommunication ;
- l'entité électronique sécurisée est intégrée et/ou soudée au second terminal, de manière inamovible, comme dans le cas d'une eUICC (pour *"embedded Universal Integrated Circuit Card") ;*
- le premier profil est mémorisé dans une autre carte à microcircuit, équipant quant à elle le premier terminal (et qui est éventuellement elle aussi intégrée dans le premier terminal de manière inamovible) ;
- le procédé de traitement comprend une étape de chiffrement des données relatives au second profil par l'entité électronique sécurisée (qui mémorise le second profil), par exemple au moyen d'une clé d'un jeu de clés cryptographiques associé au second profil ;
- le serveur d'infrastructure est un premier gestionnaire d'abonnement ;
- le premier gestionnaire d'abonnement gère le premier profil et le second profil (par exemple lorsque les deux profils sont fournis par un même opérateur téléphonique, ou dans d'autre cas présentés plus loin) ;
- le procédé de traitement comprend une étape de transmission des données relatives au second profil du premier gestionnaire d'abonnement à un second gestionnaire d'abonnement ;
- l'étape de transmission est chiffrée par utilisation d'un canal sécurisé entre le premier gestionnaire d'abonnement et le second gestionnaire d'abonnement ;
- le second gestionnaire d'abonnement envoie, à réception des données relatives au second profil, des informations à un serveur d'opérateur téléphonique ;
- le procédé de traitement comprend une étape de comparaison des informations reçues par le serveur d'opérateur téléphonique à des informations de référence mémorisées par le serveur d'opérateur téléphonique ;
- le procédé de traitement comprend une étape de mise à jour de données associées au second profil au sein du second gestionnaire d'abonnement ;
- lorsque le premier gestionnaire d'abonnement gère également le second profil, c'est alors le premier (et unique dans ce cas) gestionnaire d'abonnement qui peut envoyer, à réception des données relatives au second profil, des informations à un serveur d'opérateur téléphonique et on peut alors prévoir éventuellement dans ce cas une étape de mise à jour de données associées au second profil au sein du premier gestionnaire d'abonnement ;
- le procédé de traitement comprend une étape de transmission, par le serveur d'infrastructure, de données de connexion du second profil au premier terminal ;
- le procédé de traitement comprend une étape préalable de chiffrement desdites données de connexion par un gestionnaire d'abonnement (ici le second gestionnaire d'abonnement précité), par exemple au moyen d'une clé d'un jeu de clés cryptographiques associé au second profil, et une étape d'émission des données de connexion chiffrées au serveur d'infrastructure ;
- le procédé de traitement comprend une étape de transmission, en provenance du premier terminal et via la liaison sécurisée, des données de connexion au second terminal ;
- le procédé de traitement comprend une étape de mémorisation des données de connexion (reçues du premier terminal via la liaison sécurisée) dans le second terminal (par exemple au sein de la carte à microcircuit équipant le second terminal) ;
- le procédé de traitement comprend une étape de vérification de l'intégrité des données transmises ;
- la liaison sécurisée est chiffrée au moyen d'une clé de chiffrement
- la liaison sécurisée est une liaison sans fil ou, en variante, une liaison filaire ;
- le procédé de traitement comprend une étape, préalable à l'établissement de la liaison sécurisée, de découverte des réseaux locaux.

Le premier terminal peut être par exemple embarqué dans un véhicule (tel qu'un véhicule automobile). En variante, un tel terminal peut être attaché à un dispositif fixe (non susceptible de se mouvoir par exemple dans le référentiel terrestre), tel qu'un compteur de fourniture d'énergie.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un exemple de contexte dans lequel est mise en œuvre l'invention ;
- la figure 2 est un logigramme représentant un procédé mis en œuvre dans le contexte de la figure 1 conformément à l'invention ; et
- la figure 3 est un schéma représentant les différents types de chiffrement utilisés entre différentes entités électroniques de la figure 1, notamment lors de la mise en œuvre du procédé de la figure 2.

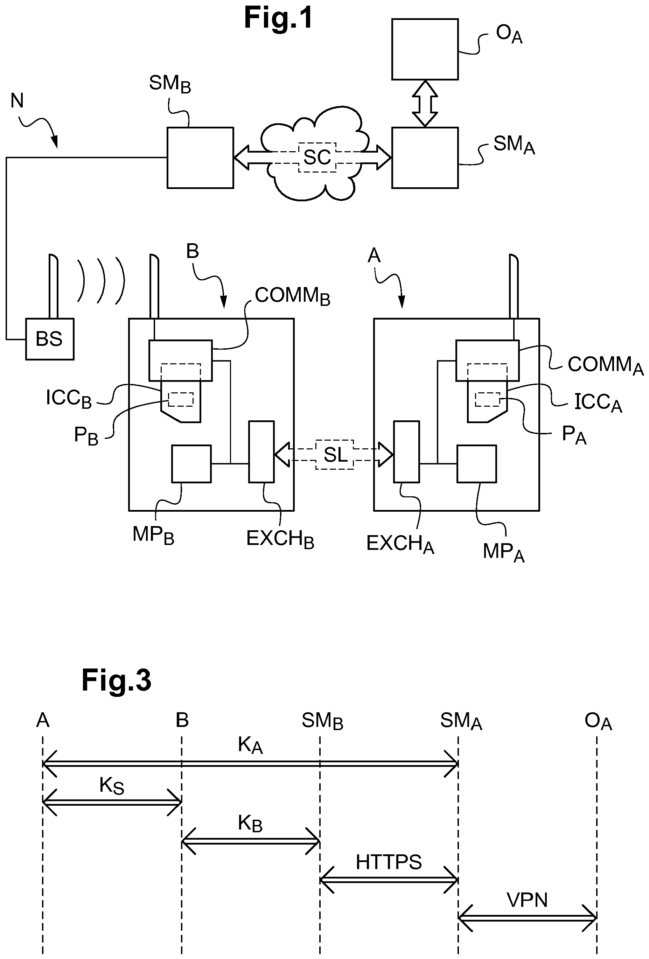

La figure 1 représente schématiquement un exemple de contexte dans lequel est mise en œuvre l'invention.

Sur la figure 1 sont notamment représentés deux terminaux A, B qui comprennent chacun un module de télécommunication COMM_{A}, COMM_{B}, un processeur MP_{A}, MP_{B} et un module d'échange de données EXCH_{A}, EXCH_{B}.

Chaque module de télécommunication COMM_{A}, COMM_{B} est conçu pour échanger des données avec une station de base BS avoisinante et accéder ainsi à un réseau de télécommunication N.

Le réseau de télécommunication N permet par exemple des communications vocales et/ou des échanges de données conformément à un ou plusieurs des protocoles suivants : GSM, GPRS, EDGE, 3G, LTE, LTE-Advanced, 4G. L'exemple décrit ici se place dans le cadre de la téléphonie mobile ; l'invention est toutefois applicable dans d'autres cadres, par exemple sur des réseaux de communication filaires ou à base de fibres optiques.

Chaque module de télécommunication COMM_{A}, COMM_{B} est équipé d'une entité électronique sécurisée, ici une carte à microcircuit ICC_{A}, ICC_{B} qui mémorise, sous forme d'un profil P_{A}, P_{B}, des données de connexion au réseau de télécommunication N.

Chaque carte à microcircuit ICC_{A}, ICC_{B} est par exemple intégrée (en pratique soudée) au terminal A, B qu'elle équipe de sorte qu'elle est inamovbile. Il s'agit ici d'une carte à microcircuit du type eUICC (pour *"embedded Universal Integrated Circuit Card*")*.* En variante, on pourrait utiliser, en tant qu'entité électronique sécurisée, un autre type de composant sécurisé soudé, tel qu'un eSE (pour *"embedded Secure Element").* En variante, l'élément sécurisé (dans l'exemple ci-dessus une eUICC) pourrait être une carte à microcircuit amovible (ou UICC pour "*Universal Integrated Circuit Card*") ou un circuit intégré sécurisé (ou SE pour *"Secure Element*")*.*

Les données de connexion d'un profil P_{A}, P_{B} sont spécifiques au profil concerné ; autrement dit, deux profils distincts P_{A}, P_{B} ont des données de connexion distinctes. Ces données de connexion incluent notamment un numéro d'abonné (par exemple du type MSISDN pour *"Mobile Station ISDN Number*") et des clés cryptographiques utilisables pour établir et/ou pour chiffrer une communication à travers le réseau de télécommunication N. Chaque profil de connexion P_{A}, P_{B} peut également contenir des données et/ou une application relatives au fonctionnement d'un module sans contact (par exemple de type NFC) tel que le module d'échange de données EXCH_{A}, EXCH_{B} décrit plus bas, notamment lorsque certaines fonctionnalités de ce module sans contact sont fournies en relation avec l'abonnement associé au profil P_{A}, P_{B} concerné.

Pour chaque carte à microcircuit ICC_{A}, ICC_{B}, le profil P_{A}, P_{B} mémorisé est géré (par exemple quant à son activation ou à sa désactivation) par un gestionnaire d'abonnement SM_{A}, SM_{B} (mis en œuvre en pratique sur un ordinateur distant relié au réseau de télécommunication N, par exemple via le réseau Internet).

Bien que cela ne soit représenté en figure 1 que pour le gestionnaire d'abonnement SM_{A}, chaque gestionnaire d'abonnement SM_{A}, SM_{B} peut communiquer par ailleurs avec un serveur O_{A} de l'opérateur téléphonique fournissant l'accès au réseau de télécommunication N au moyen du profil P_{A} géré par le gestionnaire d'abonnement (ici SM_{A}) concerné.

Les modules d'échange de données EXCH_{A}, EXCH_{B} des deux terminaux A, B peuvent entrer en communication et établir entre eux une liaison sécurisée SL afin d'échanger des données de manière sécurisée, par exemple par chiffrement des données au moyen d'une clé de chiffrement commune. La liaison sécurisée est par exemple du type SCP03 (pour *"Secure Channel Protocol 03")* telle que définie dans le document GlobalPlatform Card Spécification. En variante, la liaison sécurisée pourrait être de type SCP11 (tel que défini dans le document "*Card Secure Channel Protocol '11' Card Specification v2.2* - *Amendment F*")*.*

Ces modules d'échange de données EXCH_{A}, EXCH_{B} sont par exemple des modules utilisant une technique de communication en champ proche, ici de type NFC (pour *"Near Field Communication")* ; de tels modules entrent en communication par rapprochement des terminaux A, B. En variante, les modules d'échange de données EXCH_{A}, EXCH_{B} pourraient échanger des données en créant entre eux un réseau local (ou WLAN pour *"Wireless Local Area Network")* ou en utilisant une liaison radio courte portée (par exemple de type Bluetooth). On peut notamment utiliser des réseaux IEEE 802.11, ZigBee ou HiperLAN. Selon ces exemples, les modules d'échange de données EXCH_{A}, EXCH_{B} sont conçus pour échanger des données au moyen d'une technique de communication sans fil. En variante, on pourrait toutefois prévoir que les modules d'échange de données EXCH_{A}, EXCH_{B} communiquent au moyen d'une liaison filaire, par exemple de type USB, ou RJ45, ou encore FireWire (*i.e*. conforme à la norme IEEE 1394). Une telle liaison filaire peut également être réalisée au moyen d'un connecteur propriétaire, par exemple de type Lightning^{®} ou Thunderbolt^{®}.

L'établissement d'une liaison sécurisée entre les modules d'échange de données EXCH_{A}, EXCH_{B} est par exemple réalisée au moyen d'une technique de type SSP (pour *"Secure Simple Pairing").* Selon cette technique, les données échangées sont chiffrées (comme représenté en figure 3) au moyen d'une clé de chiffrement K_{S} commune dérivée d'une clé racine commune, elle-même obtenue par un échange de clé de type Diffie-Hellman entre les deux modules EXCH_{A}, EXCH_{B} : chaque module EXCH_{A}, EXCH_{B} combine sa propre clé privée (mémorisée dans le module concerné) et la clé publique de l'autre module (reçue de celui-ci) à l'aide d'une fonction prédéfinie afin d'obtenir la clé racine commune.

En variante, la liaison sécurisée peut être un lien NFC ou Bluetooth sécurisé, établi par exemple au moyen de certificats mémorisés respectivement dans les cartes à microcircuit ICC_{A}, ICC_{B}.

On peut également utiliser un système de chiffrement symétrique de type AES.

Le terminal A (ainsi qu'éventuellement le terminal B) peut comporter en outre un module de découverte des réseaux locaux (ayant par exemple l'un des types mentionnés ci-dessus) conçu pour détecter au moins un réseau local disponible, pour établir une liste du ou des réseau(x) locau(x) détecté(s) et/ou des appareils électroniques extérieurs accessibles via ce ou ces réseau(x) locau(x). Le module de découverte peut en outre permettre de choisir un réseau local ou un appareil électronique extérieur en vue d'un échange ultérieur de données.

Dans chaque terminal A, B, le processeur MP_{A}, MP_{B}, le module de télécommunication COMM_{A}, COMM_{B} et le module d'échange de données EXCH_{A}, EXCH_{B} sont reliés au moyen d'un bus afin de pouvoir échanger des données dans le cadre de la mise en œuvre des procédés décrits plus loin.

Chaque processeur MP_{A}, MP_{B} est par exemple réalisé sous la forme d'un microprocesseur, auquel est associé au moins une mémoire non-volatile qui mémorise des instructions exécutables par le microprocesseur afin de mettre en œuvre les différents procédés effectués par le processeur MP_{A}, MP_{B} comme décrit dans la suite. En variante, l'un au moins des processeurs MP_{A}, MP_{B} pourrait être réalisé sous la forme d'un circuit intégré à application spécifique (ou ASIC pour *"Application Specific Integrated Circuit").*

On remarque par ailleurs que l'on se réfère ici aux dispositifs A, B comme terminaux du fait de leurs possibilités de connexion au réseau de télécommunication N, mais que ces dispositifs peuvent avoir d'autres fonctionnalités : chaque dispositif A, B peut être par exemple un dispositif d'appel à un centre de secours, un équipement multimédia, de maintenance ou de sécurité embarqué dans un véhicule ou un compteur de fourniture d'énergie (apte à télétransmettre des données générées par le compteur), ou toute autre machine considérée comme faisant parti du parc M2M (pour *"Machine to Machine"* utilisant un accès au réseau de télécommunication N, *etc.*

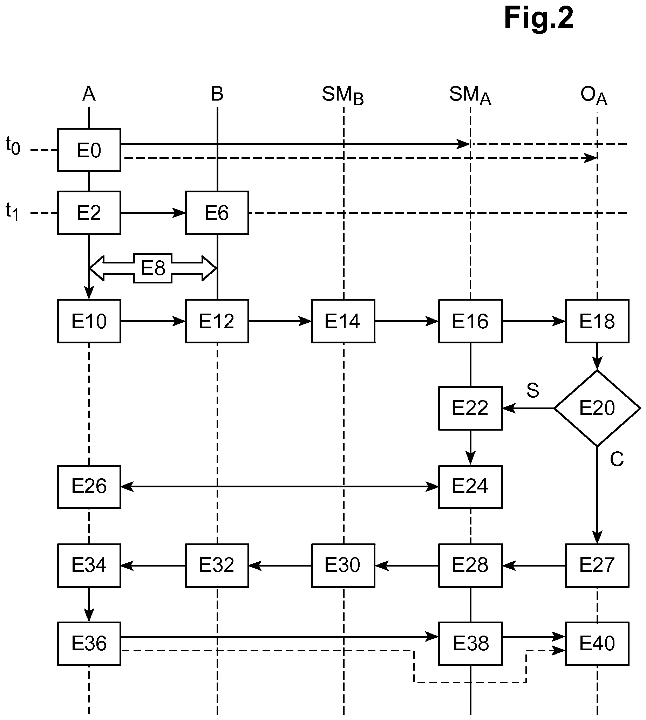

La figure 2 est un logigramme représentant un procédé mis en œuvre dans le contexte de la figure 1 conformément à l'invention.

À un temps t₀, le terminal A émet, au cours d'une étape E0, une demande d'authentification auprès du gestionnaire d'abonnement SM_{A} (qui gère le profil P_{A} mémorisé au sein du terminal A, ici dans la carte à microcircuit ICC_{A}), par exemple en vue d'accéder au réseau de télécommunication N pour émettre des données via ce réseau de télécommunication N.

En variante, la demande d'authentification pourrait être adressée (directement) au serveur O_{A} de l'opérateur téléphonique, comme représenté en pointillés en figure 2.

Dans l'exemple présenté ici pour illustrer le fonctionnement proposé par l'invention, la procédure d'authentification initiée par le terminal A à l'étape E₀ échoue du fait que certaines au moins des données de connexion utilisées par le terminal A (mémorisées dans la carte à microcircuit ICC_{A}, au sein du profil P_{A}) dans le cadre de l'authentification ne correspondent pas aux données correspondantes mémorisées par le gestionnaire d'abonnement SM_{A} (par exemple au sein de l'EIS ou "*eUICC Information Set*")*,* ou dans le serveur O_{A} dans la variante indiquée ci-dessus.

Le terminal A n'a donc pas accès au réseau de télécommunication N, ce qui est signalé au moyen d'un indicateur, par exemple un indicateur lumineux ou l'affichage d'une icône sur un écran (non représenté) du terminal A, ou par l'absence d'une icône sur un tel écran.

L'utilisateur du terminal A (ou, dans certains cas, un agent chargé de son bon fonctionnement) constate alors le problème de connexion au réseau de télécommunication N à un temps t₁ (postérieur au temps t₀) et lance par conséquent à l'étape E2 l'exécution d'un procédé de restauration de la connexion au sein du terminal A, comme décrit ci-après.

Le procédé de restauration est initié par le processeur MP_{A} du dispositif A (par exemple suite à l'appui de l'utilisateur sur un bouton dédié, éventuellement un bouton virtuel affiché sur un écran tactile) ; le procédé peut ensuite être mis en œuvre du fait de l'exécution d'une application par le processeur MP_{A} du dispositif A ou par la carte à microcircuit ICC_{A} intégré au dispositif A, ou encore par la coopération d'applications exécutées dans le processeur MP_{A} et dans la carte à microcircuit ICC_{A}.

Lors de l'initiation du procédé de restauration à l'étape E2, le terminal A commande au module d'échange de données EXCH_{A} d'émettre une demande de connexion à destination d'un terminal présent à proximité, ici le terminal B approché par l'utilisateur du terminal A dans ce but.

Selon une possibilité de réalisation envisageable, cette étape est précédée d'une étape de découverte des réseaux locaux et d'appairage des terminaux A et B, au moyen du module de découverte mentionné plus haut (chaque terminal A, B étant dans ce cas équipé d'un module de découverte).

Le terminal B reçoit la demande de connexion du terminal A à l'étape E6 (via son module d'échange de données EXCH_{B}) et affiche par exemple alors une demande de confirmation destinée à l'utilisateur.

L'utilisateur autorise alors (par exemple par appui sur un bouton, éventuellement virtuel) la mise en place d'un échange entre les terminaux A et B ; les modules d'échange de données EXCH_{A}, EXCH_{B} respectifs des terminaux A, B procèdent par conséquent à l'étape E8 à l'établissement d'une liaison sécurisée SL, comme décrit ci-dessus en référence à la figure 1.

Le terminal A peut ainsi (à l'étape E10) communiquer au terminal B, via cette liaison sécurisée (c'est-à-dire sous forme chiffrée, par exemple par chiffrement au moyen de la clé K_{S}), certaines au moins des données de connexion du profil P_{A} mémorisées dans la carte à microcircuit ICC_{A} et/ou des données relatives à la carte à microcircuit ICC_{A} (telles que des données EIS), notamment par exemple un identifiant EID de la carte à microcircuit ICC_{A}, un identifiant du gestionnaire d'abonnement SM_{A} qui gère le profil P_{A} et les données d'authentification (typiquement une clé d'authentification) du terminal A auprès du gestionnaire d'abonnement SM_{A}.

Cette transmission de données peut éventuellement être réalisée en réponse à une commande d'audit (non représentée) émise par le terminal B à destination du terminal A (précisément de la carte à microcircuit ICC_{A}), auquel cas on peut prévoir que l'utilisateur du terminal A ait à donner son accord pour cette transmission de données (par exemple par appui sur un bouton virtuel) avant la transmission effective effectuée à l'étape E10.

On peut éventuellement prévoir par ailleurs que les données transmises à l'étape E10 soient au préalable chiffrées par la carte à microcircuit ICC_{A}, par exemple au moyen d'une clé faisant partie d'un jeu K_{A} de clés cryptographiques associé au profil P_{A}. On peut en effet grâce à un tel jeu K_{A} chiffrer les échanges entre le terminal A et le gestionnaire d'abonnement SM_{A}, comme représenté en figure 3. Ce jeu de clés K_{A} est par exemple un jeu de clé utilisable dans le cadre de protocoles du type SCP03 et/ou SCP81.

Le terminal B reçoit ainsi les données de connexion du profil P_{A} et/ou les données relatives à la carte à microcircuit ICC_{A} (éventuellement sous forme chiffrée) et les transmet, via le réseau de télécommunication N, au gestionnaire d'abonnement SM_{B} (étape E12) en utilisant les données de connexion du profil P_{B} mémorisées dans la carte à microcircuit ICC_{B} équipant le terminal B, en particulier pour s'authentifier sur le réseau de télécommunication N et auprès du gestionnaire d'abonnement SM_{B} et chiffrer les données transmises au gestionnaire d'abonnement SM_{B}, par exemple au moyen d'une clé faisant partie d'un jeu K_{B} de clés cryptographiques associé au profil P_{B}. Le protocole utilisé pour ces échanges entre le terminal B et le gestionnaire d'abonnement SM_{B} est par exemple de type SCP03 ou SCP81. Le jeu de clés K_{B} est dans ce cas un jeu de clé utilisable dans le cadre de protocoles du type SCP03 et/ou SCP81.

On remarque que le réseau de télécommunication N est ici un réseau de téléphonie mobile et a ainsi un niveau de sécurité suffisant (par exemple au moyen d'un chiffrement de type AES) pour garantir l'envoi sécurisé des données de connexion du profil P_{A} entre le terminal B et le gestionnaire d'abonnement SM_{B} (via la station de base BS). On réutilise donc la sécurité déjà en place sur le réseau de télécommunication N pour l'envoi des données de connexion du profil P_{A} vers le gestionnaire d'abonnement SM_{B}.

Le gestionnaire d'abonnement SM_{B} entre alors en contact avec le gestionnaire d'abonnement SM_{A} (désigné par exemple par son identifiant dans les données communiquées par le terminal A à l'étape E10 comme indiqué ci-dessus), par exemple via le réseau Internet, afin de lui transmettre les données de connexion du profil P_{A} (défaillant) et/ou les données relatives à la carte à microcircuit ICC_{A} correspondante (étape E14). Pour ce faire, le gestionnaire d'abonnement SM_{B} utilise par exemple les données de connexion du profil P_{A} afin d'établir un canal sécurisé SC entre le gestionnaire d'abonnement SM_{B} et le gestionnaire d'abonnement SM_{A} et de chiffrer ainsi la transmission des données à destination du gestionnaire d'abonnement SM_{A}.

Selon une variante envisageable, les données transmises entre le gestionnaire d'abonnement SM_{B} et le gestionnaire d'abonnement SM_{A} sont protégées par encapsulation au sein d'un protocole sécurisé, par exemple de type HTTPS et/ou de type SOAP, comme représenté en figure 3.

Le gestionnaire d'abonnement SM_{A} reçoit les données de connexion du profil P_{A} (défaillant) et/ou les données relatives à la carte à microcircuit ICC_{A} et vérifie par exemple la cohérence de ses données avec les données correspondantes qu'il mémorise, par exemple au sein d'un EIS (pour "*eUICC Information Set*")*.* Les données de connexion reçues comprennent par exemple l'identifiant d'abonné IMSI (pour "*International Mobile Subscriber Identity*") et des données de connexion et d'authentification auprès du réseau de télécommunication N associées au profil P_{A}.

Dans la variante mentionnée ci-dessus où les données transmises sont chiffrées par la carte à microcircuit ICC_{A} à l'étape E10, le gestionnaire d'abonnement SM_{A} déchiffre au préalable les données au moyen d'une clé du jeu K_{A} (dont il est détenteur en tant que gestionnaire d'abonnement).

Le gestionnaire d'abonnement SM_{A} émet alors à l'étape E16 un message à destination du serveur de l'opérateur téléphonique O_{A} afin de l'informer du problème rencontré en joignant un rapport sur la vérification de cohérence effectuée comme indiqué ci-dessus, ainsi qu'éventuellement les données de connexion du profil P_{A} (défaillant) et/ou les données relatives à la carte à microcircuit ICC_{A} et les données correspondantes mémorisées dans le gestionnaire d'abonnement SM_{A} (par exemple au sein de l'EIS).

Selon une possibilité de réalisation, ce message est transmis au sein d'un réseau privé virtuel (ou VPN pour "*Virtual Private Network*")*,* comme représenté en figure 3.

Le serveur de l'opérateur téléphonique O_{A} reçoit ce message et les informations jointes à l'étape E18 et vérifie que l'abonnement associé au profil P_{A} concerné est toujours actif. Le procédé se poursuit comme indiqué ci-dessous si l'abonnement est actif. Dans la négative, on met fin au procédé.

Le serveur de l'opérateur téléphonique O_{A} détermine à l'étape E20 si le problème rencontré provient d'une erreur de mémorisation au niveau du gestionnaire d'abonnement SM_{A} (désynchronisation entre les données mémorisées dans le gestionnaire d'abonnement SM_{A} et les données mémorisées dans l'entité électronique sécurisée, ici la carte à microcircuit ICC_{A}) ou d'une erreur de mémorisation au niveau de la carte à microcircuit ICC_{A}. Pour ce faire, le serveur de l'opérateur téléphonique O_{A} compare par exemple les données reçues à l'étape E18 à des données de référence mémorisées au sein du serveur de l'opérateur téléphonique O_{A}.

Si une erreur de mémorisation est détectée au niveau du gestionnaire d'abonnement SM_{A} (flèche S à l'étape E20), le procédé se poursuit à l'étape E22 où les données relatives à la carte à microcircuit ICC_{A} et/ou au profil P_{A}, mémorisées dans le gestionnaire d'abonnement, sont mises à jour, par exemple au moyen d'une commande d'écriture des données correctes émises par le serveur de l'opérateur téléphonique O_{A} à destination du gestionnaire d'abonnement SM_{A} (et ce, selon une possibilité de réalisation, via le réseau privé virtuel précité).

Le gestionnaire d'abonnement SM_{A} peut alors émettre à l'étape E24 une demande de connexion à destination du terminal A.

Le terminal A peut ainsi relancer à l'étape E26 l'établissement d'une connexion, par exemple au moyen d'une demande d'authentification auprès du gestionnaire de connexion SM_{A} telle que celle prévue à l'étape E0 décrite ci-dessus. L'authentification réussit alors grâce à la correction des données réalisée à l'étape E24.

Si une erreur de mémorisation est détectée au niveau de la carte à microcircuit ICC_{A} (flèche C à l'étape E20), le procédé se poursuit à l'étape E27 à laquelle les données de connexion du profil P_{A} (ainsi qu'éventuellement d'autres données relatives à la carte à microcircuit ICC_{A}) sont transmises du serveur de l'opérateur téléphonique O_{A} au gestionnaire d'abonnement SM_{A}, puis du gestionnaire d'abonnement SM_{A} au gestionnaire d'abonnement SM_{B} (étape E28), du gestionnaire d'abonnement SM_{B} au terminal B (étape E30) et enfin du terminal B au terminal A (étape E32) via la liaison sécurisée établie entre les modules d'échange de données EXCH_{A}, EXCH_{B}. On effectue par exemple après chaque étape de transmission une vérification de l'intégrité des données transmises, par exemple au moyen d'un code de type CRC (pour "*Cyclic Redundancy Check*")*.*

On remarque que les données transmises peuvent à chaque fois chiffrées par des clés partagées entre l'entité qui émet les données et l'entité qui reçoit les données, comme cela a été le cas pour la transmission en sens inverse des données mémorisées sur la carte à microcircuit ICCA au cours des étapes E10 à E16 décrites ci-dessus.

Par ailleurs, selon une possibilité de réalisation, les données transmises peuvent être chiffrées par le gestionnaire d'abonnement SM_{A} lors de l'étape E28 (avant envoi), par exemple au moyen d'une clé faisant partie du jeu K_{A} associé au profil défaillant P_{A} (reçu à l'étape E14).

Les données reçues à l'étape E34 sont mémorisées dans la carte à microcircuit ICC_{A}, notamment en tant que données de connexion associées au profil P_{A} (en remplacement des données erronées préalablement mémorisées en tant que données de connexion du profil P_{A}). Ces données comprennent notamment ici l'identifiant d'abonné IMSI (pour *"International Mobile Subscriber Identity*") et des données de connexion et d'authentification auprès du réseau de télécommunication N associées au profil P_{A}.

Dans la variante mentionnée ci-dessus où les données transmises sont chiffrées par le gestionnaire d'abonnement SM_{A} lors de l'étape E28, la carte à microcircuit ICC_{A} procède au préalable à leur déchiffrement, ici au moyen d'une clé faisant partie du jeu K_{A} associé au profil défaillant P_{A}.

Le terminal A peut ainsi relancer à l'étape E36 l'établissement d'une connexion, par exemple au moyen d'une demande d'authentification auprès du gestionnaire de connexion SM_{A} telle que celle prévue à l'étape E0 décrite ci-dessus. L'authentification réussit alors grâce à la correction des données réalisée à l'étape E34 et le gestionnaire de connexion SM_{A} peut ainsi considérer que le processus de correction a été effectué avec succès et émettre une information correspondante à l'étape E38 à destination du serveur de l'opérateur téléphonique O_{A}, qui reçoit cette information à l'étape E40.

En variante, la demande d'authentification pourrait être adressée directement au serveur O_{A} de l'opérateur téléphonique, comme représenté en pointillés sur la figure 2.

On remarque qu'il a été considéré dans la description qui précède que le gestionnaire d'abonnement SM_{A} qui gère le profil P_{A} associé à la connexion défaillante (désigné par son identifiant dans les données communiquées du terminal A au terminal B à l'étape E10) était distinct du gestionnaire d'abonnement SM_{B} qui gère le profil P_{B} associé à la connexion active.

Il est toutefois envisageable en variante que le profil P_{A} associé à la connexion défaillante soit géré par le même gestionnaire d'abonnement que le profil P_{B} associé à la connexion active, par exemple lorsque les deux profils sont fournis par un même opérateur téléphonique (ou par des opérateurs téléphoniques distincts qui partagent une partie au moins de l'architecture du réseau de télécommunications et notamment le gestionnaire d'abonnement précité) et/ou lorsque deux terminaux A, B sont de type (ou de marque) identique et/ou lorsque les deux terminaux A, B sont connectés au réseau de télécommunication N dans une même zone géographique.

Le gestionnaire d'abonnement commun effectue alors les fonctions réalisées dans l'exemple décrit ci-dessus par les deux gestionnaires d'abonnement SM_{A}, SM_{B}, sauf les échanges prévus entre les gestionnaires d'abonnement SM_{A}, SM_{B}.

## Revendications

1. Procédé de traitement d'une connexion défaillante à un réseau de télécommunication (N), **caractérisé en ce qu'**il comprend les étapes suivantes :
- émission (E0), par un premier terminal (A), d'une demande d'authentification en vue d'accéder au réseau de télécommunication (N) ;
- échec de la procédure d'authentification du fait que certaines au moins des données de connexion mémorisées dans une carte à microcircuit (ICC_{A}) du premier terminal (A) au sein d'un premier profil (P_{A}) d'accès au réseau de télécommunication (N) et utilisées par le premier terminal (A) dans le cadre de l'authentification ne correspondent pas aux données correspondantes mémorisées dans un premier gestionnaire d'abonnement (SM_{A}) ou un serveur d'opérateur téléphonique (O_{A}) ;
- établissement (E8) d'une liaison sécurisée (SL) entre un second terminal (B), mémorisant un second profil (P_{B}) d'accès au réseau de télécommunication (N), et le premier terminal (A) ;
- communication (E10), du premier terminal (A) au second terminal (B) et via la liaison sécurisée (SL), de données relatives au premier profil (P_{A}) ;
- transmission (E12), par le second terminal (B) en utilisant le second profil (P_{B}), des données relatives au premier profil (P_{A}) à un second gestionnaire d'abonnement (SM_{B}) du réseau de télécommunication (N) ;
- transmission (E14) des données relatives au premier profil (P_{A}) du second gestionnaire d'abonnement (SM_{B}) au premier gestionnaire d'abonnement (SM_{A}) ;
- à réception des données relatives au premier profil (P_{A}), envoi, par le premier gestionnaire d'abonnement (SM_{A}), des données relatives au premier profil (P_{A}) et de données correspondantes mémorisées dans le premier gestionnaire d'abonnement (SM_{A}) au serveur d'opérateur téléphonique (O_{A}) au sein d'un premier message ;
- à réception de ce premier message, détermination (E20) par le serveur de l'opérateur téléphonique (O_{A}) si l'échec de la procédure d'authentification provient d'une erreur de mémorisation au niveau du premier gestionnaire d'abonnement (SM_{A}) ou d'une erreur de mémorisation au niveau de la carte à microcircuit (ICC_{A}) ;
- quand une erreur de mémorisation est détectée au niveau du premier gestionnaire d'abonnement (SM_{A}), mise à jour (E22) de données associées au premier profil (P_{A}) au sein du premier gestionnaire d'abonnement (SM_{A}) ;
- quand une erreur de mémorisation est détectée au niveau de la carte à microcircuit (ICC_{A}), transmission de données de connexion du premier profil du premier gestionnaire d'abonnement (SM_{A}) au second gestionnaire d'abonnement (SM_{B}), puis transmission (E30), par le second gestionnaire d'abonnement (SM_{B}), des données de connexion du premier profil (P_{A}) au second terminal (B), puis transmission (E32), en provenance du second terminal (B) et via la liaison sécurisée (SL), des données de connexion au premier terminal (A) et mémorisation des données de connexion dans le premier terminal (A).

2. Procédé de traitement selon la revendication 1, dans lequel la carte à microcircuit (ICC_{A}) est un module de souscripteur d'abonnement comprenant au moins une clé et un identifiant de connexion au réseau de télécommunication (N).

3. Procédé de traitement selon la revendication 1 ou 2, comprenant une étape de chiffrement des données relatives au premier profil (P_{A}) par la carte à microcircuit (ICC_{A}).

4. Procédé de traitement selon l'une des revendications 1 à 3, dans lequel l'étape de transmission (E14) des données relatives au premier profil (P_{A}) du second gestionnaire d'abonnement (SM_{B}) au premier gestionnaire d'abonnement (SM_{A}) est chiffrée par utilisation d'un canal sécurisé (SC) entre le second gestionnaire d'abonnement (SM_{B}) et le premier gestionnaire d'abonnement (SM_{A}).

5. Procédé de traitement selon l'une des revendications 1 à 4, comprenant une étape préalable de chiffrement desdites données de connexion par le premier gestionnaire d'abonnement (SM_{A}) et une étape d'émission des données de connexion chiffrées au second gestionnaire d'abonnement (SM_{B}).

6. Procédé de traitement selon l'une des revendications 1 à 5, comprenant une étape de vérification de l'intégrité des données transmises.

7. Procédé de traitement selon l'une des revendications 1 à 6, dans lequel la liaison sécurisée (SL) est une liaison sans fil.

8. Procédé de traitement selon l'une des revendications 1 à 7, comprenant une étape, préalable à l'établissement de la liaison sécurisée, de découverte des réseaux locaux.

## Patentansprüche

1. Verfahren zur Behandlung einer defekten Verbindung zu einem Telekommunikationsnetzwerk (N), **dadurch gekennzeichnet, dass** es die folgenden Schritte umfasst:
- Senden (E0) einer Authentifizierungsanfrage durch ein erstes Endgerät (A), um auf das Telekommunikationsnetzwerk (N) zuzugreifen;
- Fehlschlagen des Authentifizierungsverfahrens, weil zumindest einige der Verbindungsdaten, die auf einer Chipkarte (ICC_{A}) des ersten Endgeräts (A) in einem ersten Profil (P_{A}) für den Zugang zu dem Telekommunikationsnetzwerk (N) gespeichert sind und von dem ersten Endgerät (A) bei der Authentifizierung verwendet werden, nicht mit den entsprechenden Daten übereinstimmen, die in einem ersten Abonnementmanager (SM_{A}) oder auf einem Server einer Telefongesellschaft (O_{A}) gespeichert sind;
- Aufbauen (E8) einer sicheren Verbindung (SL) zwischen einem zweiten Endgerät (B), auf dem ein zweites Profil (P_{B}) für den Zugang zu dem Telekommunikationsnetzwerk (N) gespeichert ist, und dem ersten Endgerät (A);
- Kommunizieren (E10) von Daten bezüglich des erstes Profils (P_{A}) von dem ersten Endgerät (A) an das zweite Endgerät (B) und über die sichere Verbindung (SL);
- Übertragen (E12) der Daten bezüglich des ersten Profils (P_{A}) durch das zweite Endgerät (B) unter Verwendung des zweiten Profils (P_{B}) an einen zweiten Abonnementmanager (SM_{B}) des Telekommunikationsnetzes (N);
- Übertragen (E14) der Daten bezüglich des ersten Profils (P_{A}) von dem zweiten Abonnementmanager (SM_{B}) an den ersten Abonnementmanager (SM_{A});
- nach dem Empfangen der Daten bezüglich des ersten Profils (P_{A}), Senden der Daten bezüglich des ersten Profils (P_{A}) und entsprechender Daten, die in dem ersten Abonnementmanager (SM_{A}) gespeichert sind, durch den ersten Abonnementmanager (SM_{A}) an den Server der Telefongesellschaft (O_{A}) in einer ersten Nachricht;
- nach dem Empfangen dieser ersten Nachricht, Bestimmen (E20) durch den Server der Telefongesellschaft (O_{A}), ob das Fehlschlagen des Authentifizierungsverfahrens auf einen Speicherfehler bei dem ersten Abonnementmanager (SM_{A}) oder auf einen Speicherfehler bei der Chipkarte (ICC_{A}) zurückzuführen ist;
- wird ein Speicherfehler bei dem ersten Abonnementmanager (SM_{A}) erkannt, Aktualisieren (E22) von dem ersten Profil (P_{A}) entsprechenden Daten in dem ersten Abonnementmanager (SM_{A});
- wird ein Speicherfehler bei der Chipkarte (ICC_{A}) erkannt, Übertragen von Verbindungsdaten des ersten Profils von dem ersten Abonnementmanager (SM_{A}) an den zweiten Abonnementmanager (SM_{B}), sodann Übertragen (E30) der Verbindungsdaten des ersten Profils (P_{A}) durch den zweiten Abonnementmanager (SM_{B}) an das zweite Endgerät (B), sodann Übertragen (E32) der Verbindungsdaten von dem zweiten Endgerät (B) aus über die sichere Verbindung (SL) an das erste Endgerät (A) und Speichern der Verbindungsdaten in dem ersten Endgerät (A).

2. Behandlungsverfahren nach Anspruch 1, wobei die Chipkarte (ICC_{A}) ein Abonnentenmodul ist, das mindestens einen Schlüssel und eine Kennung für die Verbindung mit dem Telekommunikationsnetzwerk (N) umfasst.

3. Behandlungsverfahren nach Anspruch 1 oder 2, das einen Schritt des Verschlüsselns der Daten bezüglich des ersten Profils (P_{A}) durch die Chipkarte (ICC_{A}) umfasst.

4. Behandlungsverfahren nach einem der Ansprüche 1 bis 3, wobei der Schritt des Übertragens (E14) der Daten bezüglich des ersten Profils (P_{A}) von dem zweiten Abonnementmanager (SM_{B}) an den ersten Abonnementmanager (SM_{A}) durch die Verwendung eines sicheren Kanals (SC) zwischen dem zweiten Abonnementmanager (SM_{B}) und dem ersten Abonnementmanager (SM_{A}) verschlüsselt wird.

5. Behandlungsverfahren nach einem der Ansprüche 1 bis 4, das einen vorausgehenden Schritt des Verschlüsselns der Verbindungsdaten durch den ersten Abonnementverwalter (SM_{A}) und einen Schritt des Sendens der verschlüsselten Verbindungsdaten an den zweiten Abonnementverwalter (SM_{B}) umfasst.

6. Behandlungsverfahren nach einem der Ansprüche 1 bis 5, das einen Schritt des Prüfens der Integrität der übertragenen Daten umfasst.

7. Behandlungsverfahren nach einem der Ansprüche 1 bis 6, wobei die sichere Verbindung (SL) eine drahtlose Verbindung ist.

8. Behandlungsverfahren nach einem der Ansprüche 1 bis 7, das dem Aufbau der sicheren Verbindung vorausgehend einen Schritt des Entdeckens des lokalen Netzwerke umfasst.

## Claims

1. A method for processing a failed connection to a telecommunication network (N), **characterized in that** it comprises the following steps:
- sending (E0), by a first terminal (A), an authentication request in order to access the telecommunication network (N);
- failure of the authentication procedure because at least some of the connection data stored in a microcircuit card (ICC_{A}) of the first terminal (A) within a first access profile (P_{A}) to the telecommunication network (N) and used by the first terminal (A) for authentication do not correspond to the corresponding data stored in a first subscription manager (SM_{A}) or a telephone operator server (O_{A});
- establishing (E8) a secure link (SL) between a second terminal (B), storing a second profile (P_{B}) for access to the telecommunications network (N), and the first terminal (A);
- communicating (E10), from the first terminal (A) to the second terminal (B) and via the secure link (SL), data relating to the first profile (P_{A});
- transmitting (E12), by the second terminal (B) using the second profile (P_{B}), the data relating to the first profile (P_{A}) to a second subscription manager (SM_{B}) of the telecommunications network (N);
- transmitting (E14) data relating to the first profile (P_{A}) from the second subscription manager (SM_{B}) to the first subscription manager (SM_{A});
- upon receipt of the data relating to the first profile (P_{A}), sending, by the first subscription manager (SM_{A}), the data relating to the first profile (P_{A}) and corresponding data stored in the first subscription manager (SM_{A}) to the telephone operator server (O_{A}) within a first message;
- upon receipt of this first message, determining (E20), by the telephone operator's server (O_{A}), whether the failure of the authentication procedure comes from a storage error at the first subscription manager (SM_{A}) or from a storage error at the microcircuit card (ICC_{A});
- when a storage error is detected at the first subscription manager (SM_{A}), updating (E22) of data associated with the first profile (P_{A}) within the first subscription manager (SM_{A});
- when a storage error is detected at the microcircuit card (ICC_{A}), transmitting connection data from the first profile from the first subscription manager (SM_{A}) to the second subscription manager (SM_{B}), then transmitting (E30), by the second subscription manager (SM_{B}), connection data from the first profile (P_{A}) to the second terminal (B), then transmitting (E32), from the second terminal (B) and via the secure link (SL), the connection data to the first terminal (A) and storage of the connection data in the first terminal (A).

2. The processing method according to claim 1, wherein the microcircuit card (ICC_{A}) is a subscription subscriber module comprising at least a key and a telecommunication network connection identifier (N).

3. The processing method according to claim 1 or 2, comprising a step of encrypting data relating to the first profile (P_{A}) by the microcircuit card (ICC_{A}).

4. The processing method according to one of claims 1 to 3, wherein the step of transmitting (E14) data relating to the first profile (P_{A}) from the second subscription manager (SM_{B}) to the first subscription manager (SM_{A}) is encrypted by using a secure channel (SC) between the second subscription manager (SM_{B}) and the first subscription manager (SM_{A}).

5. The processing method according to one of claims 1 to 4, comprising a prior step of encrypting said connection data by the first subscription manager (SM_{A}) and a step of sending the encrypted connection data to the second subscription manager (SM_{B}).

6. The processing method according to one of claims 1 to 5, comprising a step of verifying the integrity of the transmitted data.

7. The processing method according to one of claims 1 to 6, wherein the secure link (SL) is a wireless link.

8. The processing method according to one of claims 1 to 7, comprising a step, prior to establishing the secure link, of discovering local networks.
